# EUROPÄISCHE PATENTSCHRIFT

(11) **EP 0 733 562 B1**
(45) Veröffentlichungstag und Bekanntmachung des Hinweises auf die Patenterteilung: **22.09.1999**
(21) Anmeldenummer: 96103265.3
(22) Anmeldetag: 02.03.1996
(51) Int. Cl.: B65F 3/00, G01V 3/08, B65F 1/14

(54) **Vorrichtung zum automatischen Positionieren eines Schwenkarms**
Device for automatically positioning a swivel arm
Dispositif de positionnement automatique d'un bras orientable

(30) Priorität: 22.03.1995 DE 19510359
(43) Veröffentlichungstag der Anmeldung: 25.09.1996
(73) Patentinhaber: Gebr. OTTO KG, 57223 Kreuztal (DE)
(72) Erfinder: Fröhlingsdorf, Udo, Dipl.-Ing., 57462 Olpe/Biggesee (DE)
(74) Vertreter: COHAUSZ HANNIG DAWIDOWICZ & PARTNER

(56) Entgegenhaltungen:
- EP-A- 0 078 011
- EP-A- 0 214 453
- DE-A- 3 909 762
- DE-A- 4 100 222
- DE-U- 9 211 468
- DE-U- 9 310 115

## Beschreibung

Die Erfindung betrifft ein System umfassend einen Schwenkarm einer Hebevorrichtung und einen Abfallbehälter, wobei der Schwenkarm an einer festgelegten Stelle des Abfallbehälters positionierbar ist.

Bei der Entleerung von Abfallbehältern mittels dazu geeigneter Fahrzeuge ist zur Kostensenkung eine weitgehende Automatisierung vorteilhaft. Es sind Fahrzeuge bekannt, deren Hebevorrichtung zum Ergreifen und Entleeren der Abfallbehälter (Schüttung) so ausgelegt ist, daß sie den Behälter vor dem Fahrzeug oder seitlich davon aufnimmt und entleert. Derartige Einrichtungen ermöglichen es dem Fahrer, die Behälter weitgehend ohne zusätzliches Personal aufzunehmen.

Um die Aufnahme weiter zu erleichtern, sind spezielle Führungseinrichtungen an Hebevorrichtungen und an Behältern bekannt, die ein Einfädeln und Zentrieren des Behälters bewirken. Derartige Einrichtungen gehen allerdings mit erheblichen Veränderungen an den Abfallbehältern einher und sind daher aufwendig.

Aus den Dokumenten DE 39 09 762 und EP 0 078 011 A1 sind Systeme bekannt, mit denen die Lage eines Objektes insbesondere eines Abfallbehälters im Raum mit Hilfe eines videooptischen Sensors registriert wird. Bei diesem System erkennt ein Sensor an dem Objekt angebrachte retroreflektierende Marken, die von einer Lichtquelle beleuchtet werden. Das System ist so ausgelegt, daß es zur Steuerung einer Handhabungsvorrichtung eingesetzt werden kann. In einer besonderen Ausführungsform wird das System in Müllfahrzeugen benutzt, um bereitgestellte Abfallbehälter mit einer Greifklaue automatisch aufzunehmen und zu verkippen.

Der Nachteil des genannten Systems liegt darin, daß es aufwendig und trotz der retroreflektierenden Eigenschaft anfällig auf eine Verschmutzung der auf den Abfallbehältern angebrachten Marken ist. Gerade bei dem "rauhen" Einsatz des System zur Entleerung von Abfallbehältern wirkt sich dieser Nachteil gravierend aus. Auch werden die verwendeten Marken durch die nicht zu umgehende extreme mechanische Beanspruchung stark in Mitleidenschaft gezogen und verlieren ihre retroreflektierenden Eigenschaften.

Ein weiterer Nachteil des genannten Systems ist, daß die Marken aktiv beleuchtet werden müssen. Das setzt voraus, daß die Lichtquelle sehr genau auf den mit den Marken versehenen Gegenstand ausgerichtet werden muß. Dieser Umstand macht das System gerade für den genannten Einsatz ineffektiv und aufwendig.

Weiterhin ist aus der DE 41 00 222 eine Vorrichtung zur berührungslosen Identifikation von Gegenständen insbesondere von Abfallbehältern bekannt. Dieses System verwendet Identifikationselemente, die eine bestimmte Zonierung von zwei unterschiedlichen Werkstoffen, insbesondere einem Metall und einem Kunststoff aufweisen. In der besonderen Zonierung ist Information kodiert, die mittels einer Leseeinheit gelesen wird. Die Leseeinheit hat Sensoren, die sich auf eine bestimmte Lesetiefe einstellen lassen, um den variablen Abstand zwischen Leseeinheit und Identifikationselement berücksichtigen zu können. Mit der Variation der Lesetiefe wird es außerdem möglich, die Sensoren auf die Identifikationseinheit zu fokussieren.

Der Nachteil dieses Systems ist, daß die Leseeinheit beim Lesen genau parallel zu dem Identifikationselement ausgerichtet werden muß, um die Information richtig aufnehmen zu können. Das System ist daher lediglich für den manuellen Einsatz geeignet. Dabei müssen Lesegerät und Identifikationselement von Hand zusammengeführt werden. Trotz einer genauen Ausrichtung ist es dennoch nötig, zusätzlich zu der Information einen Prüfcode zu übertragen der die gelesene Information verifiziert.

Trotz der möglichen Fokussierung der einzelnen Sensoren auf das Identifikationselement, lassen sich durch metallischen Müll hervorgerufene Störungen nur schwerlich ausschließen. Zu Eingrenzung der Lesefehler bedarf es einer komplizierten Elektronik, die die Fokussierung steuert.

Aufgabe der Erfindung ist es, eine konstruktiv einfache und sicher arbeitende Vorrichtung zu schaffen, die den Kopf eines Schwenkarmes automatisch an eine festgelegte Stelle eines Abfallbehälters führt, um dann den Abfallbehälter mit einem Greifer am Kopf aufzunehmen.

Diese Aufgabe wird bei einer Vorrichtung der eingangs genannten Art durch die kennzeichnenden Merkmale des Anspruch 1 gelöst.

Diese Vorrichtung hat gegenüber den üblichen Verfahren, bei denen die Abfallbehälter von Hand der Hebevorrichtung zugeführt werden, den Vorteil, daß durch die automatische Aufnahme zusätzliches Ladepersonal eingespart werden kann.

Im Gegensatz zu den bekannten automatischen Systemen ist die Vorrichtung bei einfacher Bedienbarkeit sicher in ihrer Funktion. Der Fahrer eines Müllfahrzeuges wird nicht mit komplizierten Einrichtungen konfrontiert, die er bedienen und überwachen muß.

Für die Aufnahme der Behälter ist keine besondere Geschicklichkeit des Fahrers notwendig. Er fährt sein Fahrzeug in eine beliebige Position, von der aus er die Behälter sehen kann. Dann steuert er mittels eines Joystick den Schwenkarm seines Fahrzeuges unter Sichtkontrolle in eine Ausgangsposition nahe eines Abfallbehälters und aktiviert die Automatik. Diese führt den Kopf des Schwenkarmes präzise an die richtige Stelle und wartet auf ein Bestätigungssignal vom Fahrer bevor der Greifer den Abfallbehälter ergreift.

Da der Kopf des Schwenkarmes, an dem ein Greifer und/oder eine Schnittstelle zur Informationsübertragung angebracht ist, sich selbständig sehr genau in Position bringt, ist es nicht nötig, eine zusätzliche Einrichtung am Abfallbehälter anzubringen, die für eine mechanische Aufnahmezentrierung sorgt. Aus diesem Grunde kann die Vorrichtung auf die herkömmlichen Abfallbehälter (mit DIN/AFNOR-Kamm) angewendet werden, ohne daß diese kostspielig aufgerüstet werden müßten.

Um mit der Vorrichtung Abfallbehälter entleeren zu können, ist es nicht nötig, diese besonders aufzurüsten. So können zur Not, beispielsweise beim Fahrzeugausfall, diese auch mit konventionellen Hebevorrichtungen entleert werden. Fahrzeuge, die mit der erfindungsgemäßen Vorrichtung ausgestattet sind, lassen sich also beliebig durch herkömmliche Fahrzeuge ersetzen und umgekehrt.

Ein besonderer Vorteil ist, daß die Vorrichtung im Gegensatz zu optischen Methoden völlig unempfindlich gegen äußere Verschmutzung ist.

Eine Irritation, die in dem Behälter befindlicher metallischer Müll bei den Sensoren hervorruft, kann auf einfache Weise rechnerisch ausgeschlossen werden, da die Zeichen auf den Behältern immer in einer identischen Verteilung angeordnet sind, während der metallische Müll in dem Behälter statistisch verteilt ist.

In einer besonderen Ausführungsform verfügt das Müllfahrzeug über eine Einrichtung, die Gegenstände insbesondere Abfallbehälter mit Ultraschall orten kann. Dazu ist beispielsweise auf dem Dach des Müllfahrzeuges ein Ultraschallsender angebracht, in den ein entsprechender Empfänger integriert ist. Die gesendeten Signale werden von dem Abfallbehälter reflektiert und vom Empfänger wieder aufgenommen. Aus der Charakteristik der empfangenen Signale rekonstruiert eine auf die Form von Abfallbehälten geeichte Elektronik die Position des Abfallbehälters und bewegt den Schwenkarm in diese Richtung.

Um eine sichere Ortung des Abfallbehälters aufgrund von Laufzeitunterschieden der an verschiedenen Flächen des Abfallbehälters reflektierten Signale zu gewährleisten, ist es besonders vorteilhaft, mindestens zwei Sender und/oder mindestens zwei Empfänger zu verwenden. Dabei können die Sender und/oder die Empfänger auch am Kopf des Schwenkarmes angebracht sein.

Besonders vorteilhaft ist es, die Positionierung des Schwenkarmes in einer ersten Stufe, bei der eine größere Verstellstrecke überwunden wird, mittels der Ultraschallortung zu bewerkstelligen. Sobald der Kopf des Schwenkarmes in der Nähe der Frontplatte des Abfallbehälters positioniert ist, wird der Schwenkarmes in einer zweiten Stufe über die induktiven Sensoren gesteuert. Dabei kann die Ultraschall-Steuerung weiterhin unterstützend wirken.

In einer anderen Ausführungsform wird das System der Ultraschall-Ortung durch eine optische Identifizierung des Abfallbehälters ersetzt. Dazu ist eine Videokamera am Müllfahrzeug oder am Schwenkarm angebracht, deren Ausgangssignal einer Elektronik zugeführt wird, die aufgrund von implantierten Algorithmen die Form eines Abfallbehälters erkennt und den Schwenkarm automatisch in der Nähe des Müllbehälters positioniert. Die automatische Positionierung könnte in einer einfachen Ausführungsform durch eine manuelle Steuerung anhand der Videobilder ersetzt werden.

Ein Ausführungsbeispiel der Erfindung ist in den Zeichnungen dargestellt und wird im folgenden näher beschrieben.

Es zeigen:
- Figur 1:: Ein Müllfahrzeug mit Abfallbehältern
- Figur 2:: Der Kopf eines Schwenkarmes
- Figur 3:: Die Frontfläche eines Abfallbehälters

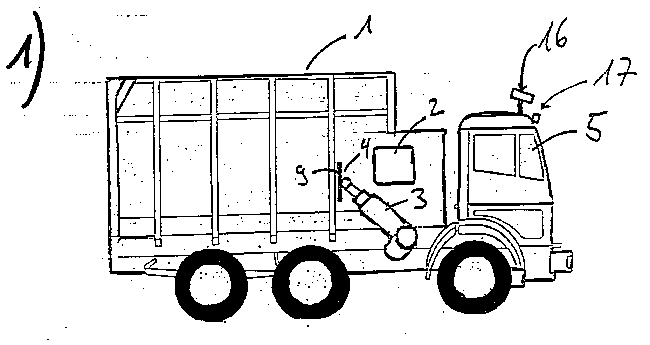

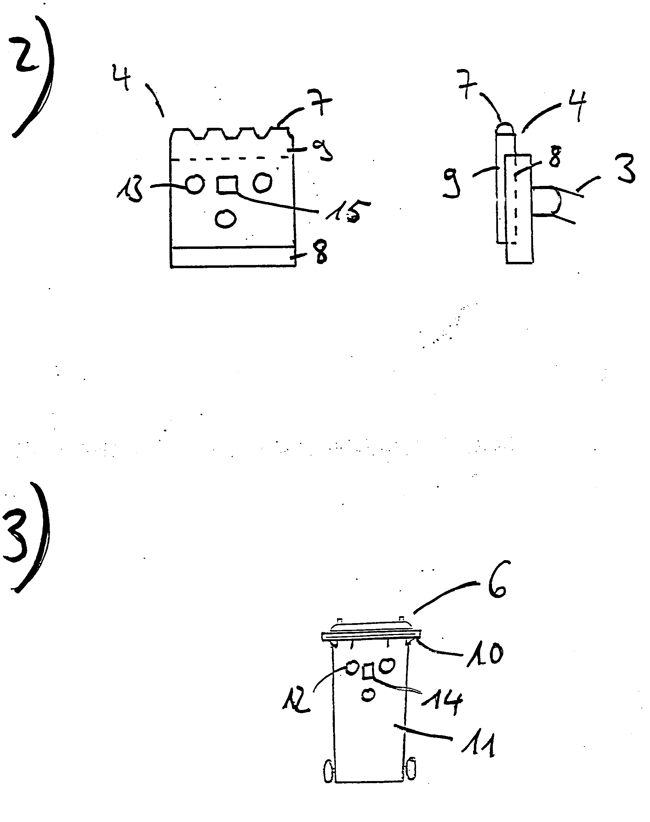

An der Seite eines Müllfahrzeuges 1 befindet sich eine Einfüllöffnung 2. An dem Müllfahrzeuge 1 ist eine Hebevorrichtung mit einem Schwenkarm 3 angebracht, mit dessen Kopf 4 Abfallbehälter ergriffen, zur Einfüllöffnung 2 geführt und in das Fahrzeug 1 entleert werden können. Der Schwenkarm 3 läßt sich nach allen Seiten bewegen und hat einen Aktionsradius von mehreren Metern.

Der Kopf 4 trägt eine Platte 9, die am Ende des Schwenkarmes 3 über ein Kugelgelenk angebracht und mittels einer Führung 8 vertikal verschiebbar ist. Der obere Rand der Platte 9 ist gezahnt und hat die Form eines Kammes 7, der in insbesondere der DIN/AFNOR entspricht.

Über eine Steuerung, beispielsweise einen Joystick, der in der Fahrerkabine 5 angebracht ist, läßt sich der Kopf des Schwenkarmes 3 unter optischer Kontrolle in die Nähe eines Abfallbehälters 6 positionieren. Mit dem Kugelgelenk läßt sich die Platte 9 ungefähr parallel zu einer Fläche, insbesondere der Frontfläche 11 des Abfallbehälters 6 ausrichten.

Wie bei den bekannten Müllfahrzeugen, untergreift der Kamm 7 den Kragen 10 des Abfallbehälters 6. Der Abfallbehälter läßt sich mittels der standardisierten Aufnahme mit Kamm 7 und Kragen 10 sicher untergreifen und zur Einfüllöffnung 2 führen.

Auf der Frontfläche 11 des Abfallbehälters 6 aus Kunststoff sind metallische Leitzeichen 12 angebracht. Diese Leitzeichen 12 sind in einer vorteilhaften Form runde Bleche oder Folien, die auf der Frontseite 11 von Abfallbehältern 6 angebracht, im einfachsten Fall aufgeklebt sind. Mindestens zwei der Zeichen 12 sind in einer von Abfallbehälter zu Abfallbehälter wiederkehrenden Anordnung aufgebracht. Es ist vorteilhaft, die metallischen Leitzeichen 12 zu magnetisieren.

Um die Zeichen vor mechanischer Berührung zu schützen, ist es besonders vorteilhaft, sie im Kunststoff der Frontfläche 11 eines Abfallbehälters 6 einzulassen.

Auf der Platte 9 des Kopfes sind Sensoren 13 angebracht, die von den Leitzeichen 12 beeinflußbar sind. Mindestens zwei der Sensoren 13 sind in derselben wiederkehrenden Anordnung der Leitzeichen 12 auf den Abfallbehältern gruppiert. Die Sensoren 13 können Induktionsspulen aufweisen, die eine Änderung der Induktion registrieren, wenn sich ein Leitzeichen 12 in dem Magnetfeld befindet.

Um eine höhere Sensibilität zu erreichen, ist es vorteilhaft, die Sensoren als Hallsensoren auszubilden, die ein Magnetfeld, das von den permanentmagnetischen Leitzeichen 12 ausgeht, registrieren können.

Es ist vorteilhaft, als wiederkehrende Anordnung die Form eines gleichschenkligen Dreiecks zu wählen, da eine bestimmte Lage des Schwenkarmkopfes 4 zu einem Abfallbehälter 6 durch diese Form sehr genau definiert ist. Bei der Annäherung des Kopfes 4 an den Abfallbehälter registrieren die Sensoren 13 eine maximale Aktivität, wenn sie den Leitzeichen 12 auf dem Abfallbehälter genau gegenüberliegen.

Unter der Vorgabe, die Aktivität der Sensoren 13 zu optimieren, läßt sich der Kopf 4 des Schwenkarmes 3 automatisch mittels einer Steuerelektronik an die auf dem Abfallbehälter 6 gekennzeichnete Stelle positionieren. Die Leitzeichen 12 leiten den Schwenkarm 3 auf den richtigen Weg. Da die Anordnung der Zeichen festgelegt ist, lassen sich Störungen der Sensoren 13 durch metallischen Müll in dem Behälter durch eine einfache Korrelationsfunktion in der Steuerelektronik ausschließen.

Ist der Kopf 4 an der richtigen Stelle positioniert, so wird in der Fahrerkabine ein optisches oder akustisches Signal ausgelöst. Der Fahrzeugführer kann sich nun davon überzeugen, daß sich keine Hindernisse oder Personen im Arbeitsbereich befinden, bevor er die automatische Entleerung auslöst. Dabei untergreift der Kamm 7 den Kragen 10 des Abfallbehälters 6, führt diesen zur Einfüllöffnung und entleert den Behälter. Nach der Entleerung erfolgen die genannten Prozeßschritte automatisch in umgekehrter Reihenfolge, so daß der Abfallbehälter 6 wieder an derselben Stelle abgesetzt wird.

Neben diesen genannten, den Schwenkarm Leitzeichen 12, lassen sich in der Umgebung auch informative Zeichen 14 anbringen, die im einfachsten Falle aus demselben Material gefertigt und auf dieselbe Art an dem Abfallbehälter angebracht sind. In der Anordnung dieser Zeichen 14 ist eine bestimmte Information kodiert, die mittels der Sensoren 13 erfaßbar ist.

Es ist vorteilhaft, die informativen Zeichen 14 als Balken bestimmter Breite auszubilden und sie nebeneinander anzuordnen, so daß eine Art Barcode entsteht. Es ist jedoch ebenfalls denkbar, eine Fläche in der Art eines Rasters in Zonen zu unterteilen, und durch die Belegung der Zonen mit Zeichen 14 eine Information zu kodieren. Die Zahl der Zonen entspricht dabei dem Informationsgehalt in Bit.

Es ist ebenfalls vorteilhaft, die Information auf einem Datenträger, d.h. einem Magnetstreifen oder einem Speicherchip abzulegen. Dadurch wird es möglich, sie nicht nur zu lesen, sondern sie auch zu verändern.

Am Kopf 4 des Schwenkarmes 3 ist an der entsprechenden Stelle ein Lesegerät 16 angebracht. Dieses Lesegerät 16 ist entweder zum Lesen des Barcode oder zur Deutung der zonierten Zeichen ausgelegt. Das Lesegerät 16 ist dabei ebenfalls mit Sensoren 15 ausgestattet, die Induktionsspulen aufweisen oder mit dem Halleffekt funktionieren. Die gelesene Information wird zu einem Computer im Müllfahrzeug übertragen und dort registriert. Sie kann beispielsweise dazu verwendet werden, die Müllbeseitigung verbrauchsabhängig abzurechnen.

Die Steuerung des Schwenkarmes 3 wird von einer Vorrichtung unterstützt, die mittels eines auf dem Dach des Müllfahrzeuges 1 angebrachten Ultraschallsenders 16 Signale aussendet, das an dem Abfallbehälter 6 reflektiert und von Empfangseinheiten 17 aufgenommen werden. Aus dem Laufzeitunterschied der empfangenen Signale errechnet eine im Inneren des Fahrzeuges befindliche Elektronik die Position des Abfallbehälters 6 und steuert den Kopf des Schwenkarmes 3 in eine günstige Position, von der die Leitzeichen 12 sicher lesbar sind.

Die Steuerung des Schwenkarmes ist daher zweistufig. In einer ersten Stufe wird der Schwenkarm mittels Ultraschall-Ortung grob positioniert. In einer zweiten Stufe erfolgt das feine Ausrichten des Schwenkarmes 3 anhand induktiver Suche der Leitzeichen 12. Wenn der Schwenkarm 3 seine endgültige Position vor der Frontfläche 11 des Abfallbehälters gefunden hat erfolgt das Lesen der Zeichen 14.

## Patentansprüche

1. System umfassend einen Schwenkarm einer Hebevorrichtung und einen Abfallbehälter, wobei der Schwenkarm (3) an einer festgelegten Stelle des Abfallbehälters (6) positionierbar ist, **dadurch gekennzeichnet,** daß der Abfallbehälter eine Markierung bestehend aus mindestens zwei metallischen Leitzeichen (12) aufweist, und daß der Schwenkarm (3) an seinem Kopf (4) mindestens zwei auf die Leitzeichen (12) empfindliche Sensoren (13) besitzt, deren Ausgangssignale von einer elektronischen Steuerung ausgewertet und zur automatischen Positionierung des Kopfes (4) des Schwenkarmes (3) an dem Abfallbehälter (6) herangezogen werden.

2. System nach Anspruch 1,
**dadurch gekennzeichnet,** daß die Hebevorrichtung an einem Müllfahrzeug (1) befestigt ist.

3. System nach Anspruch 1,
**dadurch gekennzeichnet,** daß der Abfallbehälter (6) aus Kunststoff ist und daß die Markierung an der Frontfläche (11) des Abfallbehälters (6) sich befindet.

4. System nach Anspruch 1,
**dadurch gekennzeichnet,** daß die geometrische Anordnung der Sensoren (13) der geometrischen Anordnung der Leitzeichen (12) entspricht.

5. System nach einem der genannten Ansprüche,
**dadurch gekennzeichnet,** daß die Leitzeichen (12) Metallfolien oder Bleche sind.

6. System nach einem der genannten Ansprüche,
**dadurch gekennzeichnet,** daß die Leitzeichen (12) magnetisch sind.

7. nach einem der genannten Ansprüche,
**dadurch gekennzeichnet,** daß die Leitzeichen (12) in den Kunststoff der Frontfläche (11) des Müllbehälters (6) eingelassen sind.

8. nach einem der genannten Ansprüche,
**dadurch gekennzeichnet,** daß die Sensoren (13) Induktionsspulen aufweisen.

9. nach einem der genannten Ansprüche,
**dadurch gekennzeichnet,** daß die Sensoren (13) Hallsensoren aufweisen.

10. nach einem der genannten Ansprüche,
**dadurch gekennzeichnet,** daß die Leitzeichen (12) so am Abfallbehälter (6) angeordnet sind, daß deren Anordnung einer Codierung entspricht, die von den Sensoren erfaßbar ist.

11. nach einem der genannten Ansprüche,
**dadurch gekennzeichnet,** daß an der Frontfläche (11) zusätzlich zu den Leitzeichen (12) weitere metallische Zeichen (14) angebracht sind, deren Anordnung Information kodiert.

12. nach einem der genannten Ansprüche,
**dadurch gekennzeichnet,** daß die Information mittels eines am Kopf (4) befindlichen Lesegerätes (15) ablesbar ist.

13. nach einem der genannten Ansprüche,
**dadurch gekennzeichnet,** daß die Zeichen (14) in der Form eines Bar-Code angeordnet sind.

14. nach einem der genannten Ansprüche,
**dadurch gekennzeichnet,** daß die Zeichen (14) auf einer zonierten Fläche angeordnet sind.

15. nach einem der genannten Ansprüche,
**dadurch gekennzeichnet,** daß an der Frontfläche (11) des Müllbehälters (6) ein Datenträger insbesondere ein Magnetstreifen oder ein Speicherchip angeordnet ist.

16. nach einem der genannten Ansprüche,
**dadurch gekennzeichnet,** daß die Information an eine Rechnereinheit transferierbar und dort speicherbar ist.

17. nach einem der genannten Ansprüche,
**dadurch gekennzeichnet,** daß der Kopf (4) des Schwenkarmes (3) einen Kamm trägt, mit dem ein Kragen des Gegenstandes insbesondere des Müllbehälters (6) untergreifbar ist.

18. nach einem der genannten Ansprüche,
**dadurch gekennzeichnet,** daß das Müllfahrzeug (1) und/oder der Kopf (4) des Schwenkarmes (3) mindestens einen Ultraschallsender (16) und mindestens einen Ultraschallempfänger (17) aufweist.

19. Anspruch 18,
**dadurch gekennzeichnet,** daß die Positionierung des Schwenkarmes (3) mittels Ultraschall-Ortung des Abfallbehälters (6) geschieht.

20. nach einem der genannten Ansprüche,
**dadurch gekennzeichnet,** daß das Müllfahrzeug (1) und/oder der Kopf (4) des Schwenkarmes (3) eine Videokamera aufweist, mit deren Ausgangssignal die Positionierung des Schwenkarmes (3) geschieht.

## Claims

1. A system comprising a swivel arm of a lifting device and a refuse container, wherein the swivel arm (3) can be positioned at a fixed location on the refuse container (6), **characterised in that** the refuse container has a marking consisting of at least two metal guide signs (12), and the swivel arm (3) has at its head (4) two sensors (13) which are sensitive to the guide signs (12) and whose output signals are evaluated by an electronic control and are used for automatically positioning the head (4) of the swivel arm (3) on the refuse container (6).

2. A system according to claim 1,
**characterised in that** the lifting device is attached to a refuse disposal vehicle (1).

3. A system according to claim 1,
**characterised in that** the refuse container (6) is made of plastics and the marking is placed on the front surface (11) of the refuse container (6).

4. A system according to claim 1,
**characterised in that** the geometrical arrangement of the sensors (13) corresponds to the geometrical arrangement of the guide signs (12).

5. A system according to one of the preceding claims,
**characterised in that** the guide signs (12) are metal foils or plates.

6. A system according to one of the preceding claims,
**characterised in that** the guide signs (12) are magnetic.

7. A system according to one of the preceding claims,
**characterised in that** the guide signs (12) are let into the plastics of the front surface (11) of the refuse container (6).

8. A system according to one of the preceding claims,
**characterised in that** the sensors (13) have induction coils.

9. A system according to one of the preceding claims,
**characterised in that** the sensors (13) have Hall sensors.

10. A system according to one of the preceding claims,
**characterised in that** the guide signs (12) are so disposed on the refuse container (6) that their arrangement corresponds to a coding which can be detected by the sensors.

11. A system according to one of the preceding claims,
**characterised in that** in addition to the guide signs (12), further metal signs (14) are disposed on the front surface (11), their arrangement coding information.

12. A system according to one of the preceding claims,
**characterised in that** the information can be read by means of a reading apparatus (15) situated on the head (4).

13. A system according to one of the preceding claims,
**characterised in that** the signs (14) are arranged in the form of a bar code.

14. A system according to one of the preceding claims,
**characterised in that** the signs (14) are disposed on a zoned surface.

15. A system according to one of the preceding claims,
**characterised in that** a data carrier, more particularly a magnetic strip or a storage chip is disposed on the front surface (11) of the refuse container (6).

16. A system according to one of the preceding claims,
**characterised in that** the information can be transferred to a computer unit and stored therein.

17. A system according to one of the preceding claims,
**characterised in that** the head (4) of the swivel arm bears a comb which can engage under a collar of the article, more particularly the refuse container (6).

18. A system according to one of the preceding claims,
**characterised in that** the refuse disposal vehicle (1) and/or the head (4) of the swivel arm (3) has at least one ultrasonic transmitter (16) and at least one ultrasonic receiver (17).

19. A system according to one of the preceding claims,
**characterised in that** the swivel arm (3) is positioned by means of the ultrasonic location of the refuse container (6).

20. A system according to one of the preceding claims,
**characterised in that** the refuse disposal vehicle (1) and/or the head (4) of the swivel arm (3) has a video camera by whose output signal the swivel arm (3) is positioned.

## Revendications

1. Système comprenant un bras orientable d'un dispositif de levage et une poubelle, le bras orientable (3) étant positionnable à un emplacement déterminé de la poubelle (16),
caractérisé en ce que la poubelle présente un marquage constitué d'au moins deux signes de guidage (12) métalliques et que le bras orientable (3) possède à sa tête (4) au moins deux capteurs (13) sensibles aux signes de marquage (12), dont les signaux de sortie sont exploités par une commande électronique et sont appliqués au positionnement automatique de la tête (4) du bras orientable (3) sur la poubelle (6).

2. Système selon la revendication 1,
caractérisé en ce que le dispositif de levage est fixé à un camion de collecte des ordures ménagères (1).

3. Système selon la revendication 1,
caractérisé en ce que la poubelle (6) est en matière synthétique et que le marquage se trouve sur la surface frontale (11) de la poubelle (6).

4. Système selon la revendication 1,
caractérisé en ce que la disposition géométrique des capteurs (13) correspond à la disposition géométrique des signes de guidage (12).

5. Système selon l'une des revendications citées,
caractérisé en ce que les signes de guidage (12) sont des feuilles métalliques ou des tôles.

6. Système selon l'une des revendications citées,
caractérisé en ce que les signes de guidage (12) sont magnétiques.

7. Système selon l'une des revendications citées,
caractérisé en ce que les signes de guidage (12) sont encastrés dans la matière synthétique de la surface frontale (11) de la poubelle (6).

8. Système selon l'une des revendications citées,
caractérisé en ce que les capteurs (13) présentent des bobines d'induction.

9. Système selon l'une des revendications citées,
caractérisé en ce que les capteurs (13) présentent des capteurs à effet Hall.

10. Système selon l'une des revendications citées,
caractérisé en ce que les signes de guidage (12) sont disposés sur la poubelle (6) de telle manière que leur disposition correspond à un codage qui est détectable par les capteurs.

11. Système selon l'une des revendications citées,
caractérisé en ce que d'autres signes (14) métalliques, dont la conformation code une information, sont fixés sur la face frontale (11) en plus des signes de guidage (12).

12. Système selon l'une des revendications citées,
caractérisé en ce que l'information est lisible au moyen d'un appareil de lecture (15) se trouvant sur la tête (4).

13. Système selon l'une des revendications citées,
caractérisé en ce que les signes (14) sont disposés sous la forme d'un code barres.

14. Système selon l'une des revendications citées,
caractérisé en ce que les signes (14) sont disposés sur une surface divisée en zones.

15. Système selon l'une des revendications citées,
caractérisé en ce qu'un support de données, en particulier une piste magnétique ou une puce mémoire, est disposé sur la surface frontale (11) de la poubelle (6).

16. Système selon l'une des revendications citées,
caractérisé en ce que l'information est transférable à une unité d'ordinateur et y est mémorisable.

17. Système selon l'une des revendications citées,
caractérisé en ce que la tête (4) du bras orientable (3) porte un peigne par lequel une collerette de l'objet, en particulier de la poubelle (6), peut être prise en-dessous.

18. Système selon l'une des revendications citées,
caractérisé en ce que le camion de collecte des ordures ménagères (1) et/ou la tête (4) du bras orientable (3) présentent au moins un émetteur d'ultrasons (16) et au moins un récepteur d'ultrasons (17).

19. Système selon la revendication 18,
caractérisé en ce que le positionnement du bras orientable (3) se produit au moyen d'un repérage ultrasonique.

20. Système selon l'une des revendications citées,
caractérisé en ce que le camion de collecte des ordures ménagères (1) et/ou la tête (4) du bras orientable (3) présentent une caméra vidéo avec le signal de sortie de laquelle se produit le positionnement du bras orientable (3).
